# EUROPÄISCHE PATENTSCHRIFT

(11) **EP 1 345 988 B1**
(45) Veröffentlichungstag und Bekanntmachung des Hinweises auf die Patenterteilung: **24.08.2011**
(21) Anmeldenummer: 01990526.4
(22) Anmeldetag: 07.12.2001
(51) Int. Cl.: C08K 5/11, C08G 18/76, C08G 18/72, C08G 18/42, C08G 18/79, C08G 18/10

(54) **POLYURETHANELASTOMERE MIT VERBESSERTER HYDROLYSESTABILITÄT**
POLYURETHANE ELASTOMERS WITH IMPROVED HYDROLYSIS STABILITY
ELASTOMERES DE POLYURETHANNE PRESENTANT UNE STABILITE A L'HYDROLYSE AMELIOREE

(30) Priorität: 20.12.2000 DE 10063497
(43) Veröffentlichungstag der Anmeldung: 24.09.2003
(73) Patentinhaber: Bayer MaterialScience AG, 51368 Leverkusen (DE)
(72) Erfinder: LORENZ, Klaus, 41539 Dormagen (DE); SCHÜTZE, Marc, 40597 Düsseldorf (DE); MICHELS, Erhard, 51061 Köln (DE); ECKHARDT, Alexander, 51065 Köln (DE)
(86) Internationale Anmeldenummer: PCT/EP2001/014371
(87) Internationale Veröffentlichungsnummer: WO 2002/050179

(56) Entgegenhaltungen:
- EP-A- 0 590 414
- EP-A- 0 926 173
- EP-A- 0 982 336
- EP-A- 1 059 328
- WO-A-00/11059

## Beschreibung

Gegenstand der Erfindung sind unter Verwendung von Polyesterpolyolen hergestellte Polyurethanelastomere (PUR-Elastomere) mit verbesserter Hydrolysestabilität sowie Verfahren zu deren Herstellung.

Halbharte elastische Polyurethanformteile in kompakter oder zelliger, d.h., leicht geschäumter Ausführung werden oftmals auf der Basis von Polyester-Polyurethanmassen aufgebaut. Um die Beständigkeit dieser Materialien in feuchter Umgebung, d.h. unter hydrolytisch wirksamen Bedingungen zu verbessern, lehrt EP-A 982 336, der Isocyanat-Komponente Säuren oder Säurederivate zuzusetzen, um die Aminogruppen in den Polyisocyanat-Polyadditionsprodukten und gegebenenfalls darin enthaltene aminische Katalysatoren durch Protonierung zu blockieren und so die Rückspaltung der Urethanbindung zu verhindern. Dazu werden die Säuren bzw. Säurederivate in molarem Überschuss zu in der Mischung enthaltenen Aminen eingesetzt. DE-OS 198 38 167 schlägt für den gleichen Zweck den Einsatz von Säureanhydriden vor.

Es wurde nun gefunden, dass besonders hydrolysestabile Polyester-Polyurethane erhalten werden, wenn der Polyurethanformulierung in unterstöchiometrischen Mengen Ester von ein- oder mehrbasigen Carbonsäuren zugesetzt werden, deren (erste) Dissoziation einen pKs-Wert von 0,5 bis 4, bevorzugt von 1 bis 3, aufweist.

Gegenstand der Erfindung sind Polyurethanelastomere, erhältlich durch Umsetzung von
a) Di- und/oder Polyisocyanaten mit
b) mindestens einem Polyesterpolyol mit einer OH-Zahl von 20 bis 280, bevorzugt von 28 bis 150, mit einer Funktionalität von 1,8 bis 2,4,
c) gegebenenfalls weiteren Polyetherpolyolen oder Polyetheresterpolyolen mit OH-Zahlen von 10 bis 149 und Funktionalitäten von 2 bis 8,
d) gegebenenfalls niedermolekularen Kettenverlängerern mit einem MG < 800 und/oder Vernetzern mit OH-Zahlen von 150 bis 1870, in Gegenwart von
e) Aminkatalysatoren,
f) Estern von ein- oder mehrbasigen Carbonsäuren, deren (erste) Dissoziation einen pKs-Wert von 0,5 bis 4, bevorzugt von 1 bis 3, aufweist, wobei der mehrbasige Carbonsäureester einen mehrbasigen Carbonsäurerest aus der Gruppe bestehend aus Oxalsäure, Malonsäure, Maleinsäure, Fumarsäure, Zitronensäure, Phthalsäure, Trimellithsäure und Pyromellithsäure und einen Alkoholrest aus der Gruppe bestehend aus Methanol, Ethanol, n- oder i-Propanol, n-, i- oder tert.-Butanol und Phenol enthält,
g) gegebenenfalls Treibmitteln und
h) gegebenenfalls Zusatzstoffen,
wobei das Verhältnis der Zahl der Estergruppen in Komponente f) und der Zahl der Aminogruppen in Komponente e) maximal 1,0, bevorzugt 0,5 bis 0,8, beträgt.

Bevorzugt werden die PUR-Elastomere nach dem Prepolymer-Verfahren hergestellt, wobei zweckmäßigerweise im ersten Schritt aus zumindest einem Teil des Polyesterpolyols b) oder dessen Mischung mit Polyolkomponente c) und mindestens einem Di- oder Polyisocyanat a) ein Isocyanatgruppen aufweisendes Polyadditionsaddukt hergestellt wird. Im zweiten Schritt können massive PUR-Elastomere aus derartigen Isocyanatgruppen aufweisenden Prepolymeren durch Umsetzung mit niedermolekularen Kettenverlängerern und/oder Vernetzern d) und/oder dem restlichen Teil der Polyolkomponenten b) oder c) oder deren Mischung hergestellt werden. Werden im zweiten Schritt Wasser oder andere Treibmittel, oder Mischungen daraus mitverwendet, können mikrozellulare PUR-Elastomere hergestellt werden.

Als Ausgangskomponente a) für das erfindungsgemäße Verfahren eignen sich aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ

in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten, z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan , 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenyl-methan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), oder Naphthylen-1,5-diisocyanat (NDI) geeignet.

Ferner kommen beispielsweise in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-PS 874 430 und GB-PS 848 671 beschrieben werden, m- und p-Isocyanatophenylsulfonylisocyanate gemäß US-PS 3 454 606, perchlorierte Arylpolyisocyanate, wie sie in US-PS 3 277 138 beschrieben werden, Carbodiimidgruppen aufweisende Polyisocyanate, wie sie in US-PS 3 152 162 sowie in DE-OS 2 504 400, 2 537 685 und 2 552 350 beschrieben werden, Norbornan-diisocyanate gemäß US-PS 3 492 301, Allophanatgruppen aufweisende Polyisocyanate, wie sie in GB-PS 994 890, der BE-PS 761 626 und NL-A 7 102 524 beschrieben werden, Isocyanuratgruppen aufweisende Polyisocyanate, wie sie in US-PS 3 001 9731, in DE-PS 10 22 789, 12 22 067 und 1 027 394 sowie in DE-OS 1 929 034 und 2 004 048 beschrieben werden, Urethangruppen aufweisende Polyisocyanate, wie sie z.B. in der BE-PS 752 261 oder in US-PS 3 394 164 und 3 644 457 beschrieben werden, acylierte Harnstoffgruppen aufweisende Polyisocyanate gemäß DE-PS 1 230 778, Biuretgruppen aufweisende Polyisocyanate, wie sie in US-PS 3 124 605, 3 201 372 und 3 124 605 sowie in GB-PS 889 050 beschrieben werden, durch Telomerisationsreaktionen hergestellte Polyisocyanate, wie sie in US-PS 3 654 106 beschrieben werden, Estergruppen aufweisende Polyisocyanate, wie sie in GB-PS 965 474 und 1 072 956, in US-PS 3 567 763 und in DE-PS 1 231 688 genannt werden, Umsetzungsprodukte der obengenannten Isocyanate mit Acetalen gemäß DE-PS 1 072 385 und polymere Fettsäureester enthaltende Polyisocyanate gemäß US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylen-polyisocyanate, wie sie durch Anilin-Formaldehyd-Kondensation und anschließende Phosgenierung hergestellt, werden ("rohes MDI") und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Besonders bevorzugt werden im erfindungsgemäßen Verfahren jedoch Isocyanatgruppen aufweisende Prepolymere verwendet, die hergestellt werden durch Umsetzung mindestens einer Teilmenge Polyesterpolyol b) oder mindestens einer Teilmenge einer Mischung aus Polyesterpolyol b), Polyolkomponente c) und/oder Kettenverlängerer und/oder Vernetzer d) mit mindestens einem aromatischen Diisocyanat aus der Gruppe TDI, MDI, TODI, DIBDI, NDI, DDI, vorzugsweise mit 4,4'-MDI und/oder 2,4-TDI und/oder 1,5-NDI zu einem Urethangruppen und Isocyanatgruppen aufweisenden Polyadditionsprodukt mit einem NCO-Gehalt von 10 bis 27 Gew.-%, vorzugsweise von 12 bis 25 Gew.-%.

Wie bereits aufgerührt wurde, können zur Herstellung der isocyanatgruppenhaltigen Prepolymeren Mischungen aus b), c) und d) verwendet werden. Nach einer bevorzugt angewandten Ausführungsform werden die Isocyanatgruppen enthaltenden Prepolymere jedoch ohne Kettenverlängerer bzw. Vernetzer d) hergestellt.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung erst zur Herstellung der PUR-Elastomere einzuverleiben.

Geeignete Polyesterpolyole b) können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Malonsäure, Glutarsäure Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 / 35 bis 50 / 20 bis 32 Gew.-Teilen, und insbesondere Adipinsäure. Beispiele für zwei- und mehrwertige Alkohole sind Ethandiol, Diethylenglykol, 1,2- bzw. 1,3-Propandiol, Dipropylenglykol, Methyl-Propandiol-1,3, 1,4-Butandiol, 1,5-Pentandiol 1,6-Hexandiol, Neopentylglykol, 1,10-Decandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. o-Hydroxycapronsäure und Hydroxyessigsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder in Gegenwart von Veresterungskatalysatoren, zweckmäßigerweise in einer Atmosphäre aus Inertgasen, wie z.B. Stickstoff, Kohlenmonoxid, Helium, Argon, in Lösung und auch in der Schmelze bei Temperaturen von 150 bis 300°C, vorzugsweise 180 bis 230°C gegebenenfalls unter vermindertem Druck bis zu der gewünschten Säurezahl, die vorteilhafterweise kleiner als 10, vorzugsweise kleiner als 1 ist, polykondensiert werden.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 10 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder deren Derivate mit mehrwertigen Alkoholen vorteilhafterweise im Molverhältnis von 1 : 1 bis 1,8, vorzugsweise 1 : 1,05 bis 1,2 polykondensiert. Die erhaltenen Polyesterpolyole besitzen vorzugsweise eine Funktionalität von 1 bis 3, insbesondere 1,8 bis 2,4 und ein zahlenmittleres Molekulargewicht von 400 bis 6 000, vorzugsweise 800 bis 3500.

Als geeignete Polyesterpolyole sind ferner Hydroxylgruppen aufweisende Polycarbonate zu nennen. Als Hydroxylgruppen aufweisende Polycarbonate kommen solche der an sich bekannten Art in Betracht, die beispielsweise durch Umsetzung von Diolen, wie 1,2-Propandiol, 1,3-Propandiol, 1,4-Butandiol, 1,6-Hexandiol, Diethylenglykol, Trioxyethylenglykol und/oder Tetraoxyethylenglykol mit Dialkylcarbonaten oder Diarylcarbonaten, z. B. Diphenylcarbonat oder Phosgen hergestellt werden können.

Bevorzugt werden bei der Herstellung der erfindungsgemäßen Elastomere difunktionelle Polyesterpolyole mit einem zahlenmittlerem Molekulargewicht von 500 bis 6000, vorzugsweise von 800 bis 3500 und insbesondere von 1000 bis 3300 eingesetzt.

Gegebenenfalls werden zur Herstellung der erfindungsgemäßen Elastomere Polyetherpolyole und Polyetheresterpolyole c) eingesetzt. Polyetherpolyole können nach bekannten Verfahren, hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 3 reaktive Wasserstoffatome gebunden enthält oder durch kationische Polymerisation von Alkylenoxiden in Gegenwart von Lewis-Säuren wie Antimonpentachlorid oder Borfluorid-Etherat. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid, vorzugsweise werden Ethylenoxid und/oder 1,2-Propylenoxid eingesetzt. Die Alkylenoxide können einzeln, alternierend nacheinander oder als Mischungen verwendet werden. Bevorzugt werden Mischungen aus 1,2-Propylenoxid und Ethylenoxid eingesetzt, wobei das Ethylenoxid in Mengen von 10 bis 50% als Ethylenoxid-Endblock eingesetzt wird ("EO-cap"), so dass die entstehenden Polyole zu über 70% primäre OH-Endgruppen aufweisen. Als Startermolekül kommen Wasser oder zwei- und drei-wertige Alkohole in Betracht, wie Ethylenglykol, 1,2-Propandiol und 1,3-Propandiol, Diethylenglykol, Dipropylenglykol, Ethandiol-1,4, Glycerin, Trimethylolpropan usw. Geeignete Polyetherpolyole, besitzen eine Funktionalität von 2 bis 8, bevorzugt 2 bis 6, besonders bevorzugt 2 bis 4 und zahlenmittlere Molekulargewichte von 500 bis 8000, vorzugsweise 800 bis 3500. Vorzugsweise handelt es sich um Poly(oxypropylen-oxyethylen)polyole.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90. vorzugsweise 70:30 bis 30:70, in den vorgenannten Polyetherpolyolen hergestellt werden, sowie Polyetherpolyol-Dispersionen, die als disperse Phase, üblicherweise in einer Menge von 1 bis 50 Gew.-%, vorzugsweise 2 bis 25 Gew.-%, enthalten: z.B. anorganische Füllstoffe, Polyharnstoffe, Polyhydrazide, tert.-Aminogruppen gebunden enthaltende Polyurethane und/oder Melamin.

Zur Verbesserung der Verträglichkeit der Polyesterpolyole aus b) und der Polyetherpolyole aus c) können auch Polyetheresterpolyole zugesetzt werden. Diese werden erhalten durch Propoxylierung oder Ethoxylierung von Polyesterpolyolen vorzugsweise mit einer Funktionalität von 1 bis 3, insbesondere 1,8 bis 2,4 und einem zahlenmittleren Molekulargewicht von 400 bis 6 000, vorzugsweise 800 bis 3500.

Zur Herstellung der erfindungsgemäßen PUR-Elastomeren können zusätzlich als Komponente d) niedermolekulare difunktionelle Kettenverlängerer, tri- oder tetrafunktionelle Vernetzer oder Mischungen aus Kettenverlängerern und Vernetzern verwendet werden.

Derartige Kettenverlängerer und Vernetzer d) werden eingesetzt zur Modifizierung der mechanischen Eigenschaften, insbesondere der Härte der PUR-Elastomeren. Geeignete Kettenverlängerer wie Alkandiole, Dialkylenglykole und Polyalkylen-polyole und Vernetzungsmittel, z.B. 3- oder 4-wertige Alkohole und oligomere Polyalkylen-polyole mit einer Funktionalität von 3 bis 4, besitzen üblicherweise Molekulargewichte < 800, vorzugsweise von 18 bis 400 und insbesondere von 60 bis 300. Als Kettenverlängerer vorzugsweise verwendet werden Alkandiole mit 2 bis 12, vorzugsweise 2, 4 oder 6 Kohlenstoffatomen, z. B. Ethandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol sowie Polyoxyalkylenglykole. Geeignet sind auch verzweigtkettige und/oder ungesättigte Alkandiole mit üblicherweise nicht mehr als 12 Kohlenstoffatomen, wie z.B. 1,2-Propandiol, 2-Methyl-1,3-Propandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons oder Resorcins, z.B. 1,4-Di-(β-hydroxyethyl)-hydrochinon oder 1,3-(β-Hydroxyethyl)-resorcin, Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl- und N,N'-Dicyclohexyl-, (p- bzw. m-) -Phenylendiamin, N,N'-Dimethyl-, N,N'-Diethyl-, N,N'-Diisopropyl-, N,N'-Di-sec.-butyl-, N,N'-Dicyclohexyl-, -4,4'-diamino-diphenylmethan, N,N'-Di-sec.-butylbenzidin, Methylen-bis(4-amino-3-benzoesäuremethylester), 2,4-Chlor-4,4'-diamino-diphenylimethan, 2,4- und 2,6-Toluylendiamin.

Die Verbindungen der Komponente d) können in Form von Mischungen oder einzeln eingesetzt werden. Verwendbar sind auch Gemische aus Kettenverlängerern und Vernetzern.

Zur Einstellung der Härte der PUR-Elastomeren können die Aufbaukomponenten b), c) und d) in relativ breiten Mengenverhältnissen variiert werden, wobei die Härte mit zunehmenden Gehalt an Komponente d) in der Reaktionsmischung ansteigt.

Zum Erhalt einer gewünschten Härte des Werkstoffs können die erforderlichen Mengen der Aufbaukomponenten b), c) und d) auf einfache Weise experimentell bestimmt werden. Vorteilhafterweise verwendet werden 1 bis 50 Gew.-Teile, vorzugsweise 3 bis 20 Gew.-Teile des Kettenverlängerers und/oder Vernetzers d), bezogen auf 100 Gew.-Teile der höhermolekularen Verbindungen b) und c).

Als Komponente e) können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylentriamin und höhere Homologe (DE-OS 26 24 527 und 26 24 528), 1,4-Diaza-bicyclo-[2,2,2]-octan, N-Methyl-N'-dimethylaminoethyl-piperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-ß-phenyl-ethyl-amin, Bis-(dimethylaminopropyl)-harnstoff, 1,2-Dimethylimidazol, 2-Methylimidazol, monocyclische und bicyclische Amidine, Bis-(dialkylamino)-alkylether sowie Amidgruppen (vorzugsweise Formamidgruppen) aufweisende tertiäre Amine gemäß DE-OS 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-OS 27 32 292. Als Katalysatoren können ferner Silaamine mit Kohlenstoff-Silizium-Bindungen, wie sie in US-PS 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt. Erfindungsgemäß können auch organische Metallverbindungen, insbesondere organische Zinnverbindungen, als zusätzliche Katalysatoren mitverwendet werden. Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Die Katalysatoren bzw. Katalysatorkombinationen werden in der Regel in einer Menge zwischen etwa 0,001 und 10 Gew.-%, insbesondere 0,01 bis 1 Gew.-% bezogen auf die Gesamtmenge an Verbindungen mit mindestens zwei gegenüber Isocyanaten reaktionsfähigen Wasserstoffatomen eingesetzt.

Als Komponente f) werden Ester ein- oder mehrbasiger Carbonäuren eingesetzt. Die in wässriger Lösung ermittelten pKs-Werte der (ersten) Dissoziation der Carbonsäuren betragen im Allgemeinen 0,5 bis 4, bevorzugt von 1 bis 3. Als Säurekomponente kommen Alkylpolycarbonsäuren wie Oxalsäure, Malonsäure, Maleinsäure, Fumarsäure, Zitronensäure und Arylpolycarbonsäuren wie die Isomeren und die alkylsubstituierten Derivate der Phthalsäure, Trimellithsäure, Pyromellithsäure, die Isomere der Naphthalindicarbonsäure und cyclische Doppelester von α-Hydroxycarbonsäuren wie Mandelsäure oder Milchsäure in Frage. Bevorzugt werden gesättigte oder ungesättigte C₂-C₄-Alkylpolycarbonsäuren eingesetzt, besonders bevorzugt Oxalsäure. Als Alkoholkomponente kommen beispielsweise aliphatische Mono- und Polyole wie Methanol, Ethanol, Propanol, Isopropanol als Arylalkohole Phenol und seine alkylsubstituierten Derivate, in Frage. Bevorzugt sind aliphatische Monoole, insbesondere Methanol, Ethanol, n- oder i-Propanol, n-,i-, oder tert.-Butanol.

Komponente f) wird bei der Herstellung der erfindungsgemäßen Elastomere in solchen Mengen eingesetzt, dass das Verhältnis der Zahl der in der Katalysatorkomponente e) enthaltenen Aminogruppen zu der Zahl der in Komponente f) enthaltenen Estergruppen maximal 1,0 beträgt. Bevorzugt wird ein Verhältnis von 0,5 bis 0,8 gewählt.

Nach dem erfindungsgemäßen Verfahren können in Abwesenheit von Feuchtigkeit und physikalisch oder chemisch wirkenden Treibmitteln kompakte PUR-Elastomere, z.B. PUR-Gießelastomere hergestellt werden.

Zur Herstellung von zelligen, vorzugsweise mikrozellularen PUR-Elastomeren findet als Treibmittel g) bevorzugt Wasser Verwendung, das mit den organischen Polyisocyanaten a) oder mit Isocyanatgruppen aufweisenden Prepolymeren in situ unter Bildung von Kohlendioxid und Aminogruppen reagiert, die ihrerseits mit weiteren Isocyanatgruppen zu Harnstoffgruppen weiterreagieren und hierbei als Kettenverlängerer wirken.

Sofern der Polyurethan-Formulierung Wasser zugegeben werden muß, um die gewünschte Dichte einzustellen, wird dieses üblicherweise in Mengen von 0,001 bis 3,0 Gew.-%, vorzugsweise von 0,01 bis 2,0 Gew.-% und insbesondere von 0,05 bis 0,5 Gew.-%, bezogen auf das Gewicht der Aufbaukomponenten a), b) und gegebenenfalls c) und d), verwendet.

Als Treibmittel g) können anstelle von Wasser oder vorzugsweise in Kombination mit Wasser auch Gase oder leicht flüchtige anorganische oder organische Substanzen, die unter dem Einfluß der exothermen Polyadditionsreaktion verdampfen und vorteilhafter Weise einen Siedepunkt unter Normaldruck im Bereich von -40 bis 120°C, vorzugsweise von 10 bis 90°C besitzen, als physikalische Treibmittel eingesetzt werden. Als organische Treibmittel kommen z.B. Aceton, Ethylacetat, halogensubstituierte Alkane oder perhalogenierte Alkane wie (R134a, R141b, R365mfc, R245fa), ferner Butan, Pentan, Cyclopentan, Hexan, Cyclohexan, Heptan oder Diethylether, als anorganische Treibmittel z.B. Luft, CO₂ oder N₂O, in Frage. Eine Treibwirkung kann auch erzielt werden durch Zusatz von Verbindungen, die sich bei Temperaturen oberhalb der Raumtemperatur unter Abspaltung von Gasen, beispielsweise von Stickstoff und/oder Kohlendioxid, zersetzen wie Azoverbindungen, z.B. Azodicarbonamid oder Azoisobuttersäurenitril, oder Salzen wie Ammoniumbicarbonat, Ammoniumcarbamat oder Ammoniumsalzen organischer Carbonsäuren, z.B. der Monoammoniumsalze der Malonsäure, Borsäure, Ameisensäure oder Essigsäure. Weitere Beispiele für Treibmittel sowie Einzelheiten über die Verwendung von Treibmitteln sind in R. Vieweg, A. Höchtlen (Hrsg.): "Kunststoff-Handbuch", Band VII, Carl-Hanser-Verlag, München 3. Auflage, 1993, S.115-118, 710-715 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen eingesetzt werden können, hängt ab von der angestrebten Dichte und der eingesetzten Menge an Wasser. Die erforderlichen Mengen können experimentell leicht ermittelt werden. Zufriedenstellende Ergebnisse liefern üblicherweise Feststoffmengen von 0,5 bis 35 Gew.-%, vorzugsweise 2 bis 15 Gew.-%, Flüssigkeitsmengen von 0,5 bis 30 Gew.-%, vorzugsweise von 0,8 bis 18 Gew.-% und/oder Gasmengen von 0,01 bis 80 Gew.-%, vorzugsweise von 10 bis 50 Gew.-%, jeweils bezogen auf das Gewicht der Aufbaukomponenten a), b), c) und gegebenenfalls d). Die Gasbeladung mit z. B. Luft, Kohlendioxid, Stickstoff und/oder Helium kann sowohl über die höhermolekulare Polyhydroxylverbindungen b) und c), über das niedermolekulare Kettenverlängerer und/oder Vernetzer d) als auch über die Polyisocyanate a) oder über a) und b) und gegebenenfalls c) und d) erfolgen.

Der Reaktionsmischung zur Herstellung der kompakten und zelligen PUR-Elastomeren können gegebenenfalls Zusatzstoffe h) einverleibt werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-PS 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 25 58 523. Geeignet sind auch andere Organopolysiloxane, oxyethylierte Alkylphenole, oxyethylierte Fettalkohole, Paraffinöle, Ricinusöl- bzw. Ricinolsäureester, Türkischrotöl, Erdnußöl und Zellregler wie Paraffine, Fettalkohole und Polydimethylsiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen b) und c) angewandt. Zugesetzt werden können auch Reaktionsverzögerer, ferner Pigmente oder Farbstoffe und an sich bekannte Flammschutzmittel, ferner Stabilisatoren gegen Alterungs- und Witterungseinflüsse, Weichmacher und fungistatisch und bakteriostatisch wirkende Substanzen.

Weitere Beispiele von gegebenenfalls erfindungsgemäß mitzuverwendenden oberflächenaktiven Zusatzstoffen und Schaumstabilisatoren sowie Zelkreglern, Reaktionsverzögerem, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München, 3. Auflage, 1993, S. 118-124 beschrieben.

Zur Herstellung der erfindungsgemäßen PUR-Elastomeren werden die Komponenten in solchen Mengen zur Umsetzung gebracht, dass das Äquivalenzverhältnis der NCO-Gruppen der Polyisocyanate a) zur Summe der gegenüber Isocyanatgruppen reaktiven Wasserstoffe der Komponenten b), c), d) sowie eventuell eingesetzter chemisch wirkender Treibmittel 0,8:1 bis 1,2:1, vorzugsweise 0,95:1 bis 1,15:1 und insbesondere 1,00:1 bis 1,05:1 beträgt.

Die erfindungsgemäßen PUR-Werkstoffe können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden. Vorzugsweise werden sie nach dem Prepolmer-Verfahren hergestellt.

In einer Ausführungsform der Herstellung der erfindungsgemäßen PUR-Werkstoffe werden die Ausgangskomponenten in Abwesenheit von Treibmitteln g) üblicherweise bei einer Temperatur von 20 bis 80°C, vorzugsweise von 25 bis 60°C homogen gemischt, die Reaktionsmischung in ein offenes, gegebenenfalls temperiertes Formwerkzeug eingebracht und aushärten gelassen. In einer weiteren Variante der Herstellung der erfindungsgemäßen PUR-Elastomeren werden die Aufbaukomponenten in gleicher Weise in Gegenwart von Treibmitteln g), vorzugsweise Wasser, gemischt und in das gegebenenfalls temperierte Formwerkzeug eingefüllt. Nach der Befüllung wird das Formwerkzeug geschlossen und man lässt die Reaktionsmischung unter Verdichtung, z.B. mit einem Verdichtungsgrad (Verhältnis von Formkörperdichte zu Freischaumdichte) von 1,05 bis 8, vorzugsweise von 1,1 bis 6 und insbesondere 1,2 bis 4 zur Bildung von Formkörpern aufschäumen. Sobald die Formkörper eine ausreichende Festigkeit besitzen, werden sie entformt. Die Entformungszeiten sind u.a. abhängig von der Temperatur und der Geometrie des Formwerkzeugs und der Reaktivität der Reaktionsmischung und betragen üblicherweise 2 bis 15 Minuten.

Kompakte erfindungsgemäße PUR-Elastomere besitzen, u.a. abhängig vom Füllstoffgehalt und -typ, eine Dichte von 0,8 bis 1,4 g/cm³, vorzugsweise 1,0 bis 1,25 g/cm³. Zellige erfindungsgemäße PUR-Elastomere zeigen Dichten von 0,2 bis 1,4 g/cm³, vorzugsweise von 0,30 bis 0,8 g/cm³.

Derartige Polyurethan-Kunststoffe stellen besonders wertvolle Rohmaterialien für üblicherweise bewitterte, der Feuchtigkeit ausgesetzte technische Artikel wie Rollen- und Federelemente, oder auch Schuhsohlen in ein- oder mehrschichtigem Aufbau dar.

### Beispiele

Die Herstellung der Polyurethan-Prüfkörper erfolgte derart, dass man die A-Komponente bei 45°C in einer Niederdruck-Schäumanlage (NDI) mit der B-Komponente bei 45°C bei einem Massenverhältnis (MV) von A-Komponente zu B-Komponente von 100:60 vermischte, die Mischung in eine auf 50°C temperierte Aluminium-Klappform (Größe 200*140*5 mm) goß, die Klappform schloß und nach 3 Minuten das Elastomer entformte.

Aus den so hergestellten Elastomer-Platten wurden nach 24 h Lagerung mit einem Stanzwerkzeug Schulterstäbe des Typs Stab I (Norm ISO 37 Typ I) als Prüfkörper ausgestanzt. Vor Beginn der Alterungsversuche wurden die Ausgangswerte der Zugfestigkeit für drei Prüfkörper nach o.g. Norm bestimmt. Die Probenkörper wurden danach einem Alterungstest bei 70°C und 100% rel. Luftfeuchtigkeit unterzogen. Die Probennahme erfolgte in regelmäßigen Abständen von 2-5 Tagen, wobei eine Anzahl von drei Prüfkörpern der Probenkammer entnommen, diese bei 25°C für 24 h rekonditioniert und dann nach DIN 53504 auf ihre Zugfestigkeit untersucht wurden. Die Ergebnisse sind in Tab. 2 zusammengefasst.

### Beispiele 1-5

### A-Komponente

100 Teile eines Gemisches aus:
- 80,7 Gew-%: 1,4-Butandiol-Ethylenglykol-Polyadipat (Verhältnis 14,1 : 20,5 : 65,4) mit einer zahlenmittleren Molmasse von 2000 g/mol
- 4,7 Gew-%: Trimethylolpropan-Ethylenglykol-polyadipat (Verhältnis 3,2 : 41,1 : 55,7) mit einer zahlenmittleren Molmasse von 2400 g/mol
- 0,3 Gew-%: Triethanolamin
- 5,0 Gew-%: Ethylenglykol
- 0,1 Gew-%: Wasser

- 0,9 Gew-%: Aminkatalysator Diaza-bicyclo-[2.2.2.]-octan
- 8,3 Gew-%: Antistatikum, Formtrennmittel und Emulgator

### B-Komponente

60 Teile eines Prepolymers mit einem NCO-Gehalt von 19% erhalten durch Umsetzung von:
- 56 Gew-%: 4,4'-MDI
- 6 Gew-%: carbodiimid-modifiziertes MDI mit 29,8 Gew-% NCO, Funktionalität 2,1 (Desmodur^{®} CD, Bayer AG)
- 38 Gew-%: Ethandiol-Diethylenglykol-Polyadipat (Verhältnis 14,3 : 24,4 : 61,3) mit einer zahlenmittleren Molmasse von 2000 g/mol

Der B-Komponente wurde jeweils die in Tabelle 1 angegebene Menge Carbonsäureester zugesetzt.

**Tabelle 1**

| Beispiel | Verbindung in B | Gew.-Teile | Verhältnis Estergruppen (Oxalsäureester) : Amino-gruppen (Katalysator) |
|---|---|---|---|
| 1 | Oxalsäurediethylester | 0,6 | 0,5 : 1 |
| 2 | Oxalsäurediethylester | 1,2 | 1,0 : 1 |
| 3 Vergleich | Oxalsäurediethylester | 1,7 | 1,5 : 1 |
| 4 Vergleich | Oxalsäurediethylester | 2,3 | 2,0 : 1 |
| 5 Vergleich | Oxalsäurediethylester | 2,9 | 2,5 : 1 |

**Tabelle 2**

| Beispiel | Restzugfestigkeit in Prozent vom Startwert nach Tagen Alterung bei 70°C und 100% rel. Luftfeuchtigkeit | | | | |
|---|---|---|---|---|---|
| Tage | 0 | 3 | 6 | 9 | 13 |
| Ohne Additiv | 100,0 | 60,1 | 27,1 | 10,1 | 0,0 |
| 1 | 100,0 | 107,6 | 87,1 | 62,4 | 27,1 |
| 2 | 100,0 | 84,8 | 67,1 | 61,0 | 22,6 |
| 3 Vergleich | 100,0 | 80,9 | 46,3 | 28,4 | 9,9 |
| 4 Vergleich | 100,0 | 97,6 | 49,4 | 25,9 | 8,8 |
| 5 Vergleich | 100,0 | 84,7 | 43,9 | 16,6 | 6,4 |

## Patentansprüche

1. Formkörper enthaltend Polyurethanelastomere, die erhältlich sind durch Umsetzung von
a) Di- und/oder Polyisocyanaten mit
b) mindestens einem Polyesterpolyol mit einer OH-Zahl von 20 bis 280 und einer Funktionalität von 1,8 bis 2,4
c) gegebenenfalls weiteren Polyetherpolyolen oder Polyetheresterpolyolen mit OH-Zahlen von 10 bis 149 und Funktionalitäten von 2 bis 8,
d) gegebenenfalls niedermolekularen Kettenverlängerern mit einem Molekulargewicht < 800 und/oder Vernetzern mit OH-Zahlen von 150 bis 1870,
in Gegenwart von
e) Aminkatalysatoren,
f) Ester von ein- oder mehrbasigen Carbonsäuren, deren (erste) Dissoziation einen pKs-Wert von 0,5 bis 4 aufweist, wobei der mehrbasige Carbonsäureester einen mehrbasigen Carbonsäurerest aus der Gruppe bestehend aus Oxalsäure, Malonsäure, Maleinsäure, Fumarsäure, Zitronensäure, Phthalsäure, Trimellithsäure und Pyromellithsäure und einen Alkoholrest aus der Gruppe bestehend aus Methanol, Ethanol, n- oder i-Propanol, n-, i-, oder tert.-Butanol und Phenol enthält,
g) gegebenenfalls Treibmitteln und
h) gegebenenfalls Zusatzstoffen,
wobei das Verhältnis der Zahl der Estergruppen in Komponente f) und der Zahl der Aminogruppen in Komponente e) maximal 1,0 beträgt.

2. Formkörper gemäß Anspruch 1, wobei als Komponente a) ein Prepolymer aus 4,4'-Diphenylmethandiisocyanat und einem Polyesterpolyol eingesetzt wird.

3. Verwendung der Formkörper gemäß Anspruch 1 als Rollen, Federelemente oder Schuhsohlen.

## Claims

1. Mouldings comprising polyurethane elastomers obtainable by reaction of
a) di- and/or polyisocyanates with
b) at least one polyester polyol having an OH number of 20 to 280 and a functionality of 1.8 to 2.4
c) optionally further polyether polyols or polyether ester polyols with OH numbers of 10 to 149 and functionalities of 2 to 8,
d) optionally low molecular weight chain extenders with a molecular weight of < 800 and/or crosslinkers with OH numbers of 150 to 1870,
in the presence of
e) amine catalysts,
f) esters of mono- or polybasic carboxylic acids whose (first) dissociation has a pKa of 0.5 to 4, said polybasic carboxylic ester containing a polybasic carboxylic radical from the group consisting of oxalic acid, malonic acid, maleic acid, fumaric acid, citric acid, phthalic acid, trimellitic acid and pyromellitic acid, and an alcohol radical from the group consisting of methanol, ethanol, n- or i-propanol, n-, i- or tert-butanol and phenol,
g) optionally blowing agents and
h) optionally additives,
where the ratio of the number of ester groups in component f) and the number of amino groups in component e) is not more than 1.0.

2. Mouldings according to Claim 1, wherein a prepolymer formed from diphenylmethane 4,4'-diisocyanate and a polyester polyol is used as component a).

3. Use of the mouldings according to Claim 1 as rollers, spring elements or shoe soles.

## Revendications

1. Corps moulés contenant des élastomères de polyuréthane, qui peuvent être obtenus par transformation
a) de diisocyanates et/ou de polyisocyanates avec
b) au moins un polyesterpolyol présentant un indice d'OH de 20 à 280 et une fonctionnalité de 1,8 à 2,4
c) le cas échéant d'autres polyétherpolyols ou polyétheresterpolyols présentant des indices d'OH de 10 à 149 et des fonctionnalités de 2 à 8,
d) le cas échéant d'agents d'allongement de chaîne de bas poids moléculaire présentant un poids moléculaire < 800 et/ou des réticulants présentant des indices d'OH de 150 à 1870,
en présence
e) de catalyseurs d'amine,
f) d'esters d'acides carboxyliques monobasiques ou polybasiques, dont la (première) dissociation présente une valeur pKs de 0,5 à 4, l'ester d'acide carboxylique polybasique contenant un radical acide carboxylique polybasique du groupe constitué par l'acide oxalique, malonique, maléique, fumarique, citrique, phtalique, trimellitique et pyromellitique et un radical alcool du groupe constitué par le méthanol, l'éthanol, le n-propanol ou l'i-propanol, le n-butanol, l'i-butanol ou le tert-butanol et le phénol,
g) le cas échéant d'agents gonflants et
h) le cas échéant d'additifs,
le rapport du nombre de groupes ester dans le composant f) et le nombre de groupes amino dans le composant e) valant au maximum 1,0.

2. Corps moulés selon la revendication 1, où on utilise comme composant a) un prépolymère de 4,4'-diphénylméthanediisocyanate et d'un polyesterpolyol.

3. Utilisation des corps moulés selon la revendication 1 sous forme de rouleaux, d'éléments à ressort ou de semelles de chaussures.
